# FASCICULE DE BREVET EUROPEEN

(11) **EP 3 472 745 B1**
(45) Date de publication et mention de la délivrance du brevet: **28.08.2024**
(21) Numéro de dépôt: 17737332.1
(22) Date de dépôt: 16.06.2017
(51) Int. Cl.: H04L 9/40, G06F 21/31, H04W 12/06, H04L 9/32

(54) **PROCÉDÉ D'AUTHENTIFICATION AVEC UN MOT DE PASSE COMPRENANT UN SEL**
AUTHENTIFIZIERUNGSPROZESS MIT PASSWORT UND SALT
AUTHENTIFICATION PROCESS WITH A SALTED PASSWORD

(30) Priorité: 20.06.2016 FR 1655707
(43) Date de publication de la demande: 24.04.2019
(73) Titulaire: Orange, 92130 Issy-les-Moulineaux (FR)
(72) Inventeur: FERREIRA, Loïc, 14000 CAEN (FR)
(74) Mandataire: Plasseraud IP
(86) Numéro de dépôt international: PCT/FR2017/051581
(87) Numéro de publication internationale: WO 2017/220899

(56) Documents cités:
- WO-A1-2006/014358
- WO-A1-2006/014358
- US-A1- 2003 131 266
- US-A1- 2003 131 266
- US-A1- 2011 296 509
- ALEX HALDERMAN J ET AL: "A convenient method for securely managing passwords", 14TH INTERNATIONAL CONFERENCE ON WORLD WIDE WEB, WWW 2005 : CHIBA, JAPAN, MAY 10 - 14, 2005, ASSOCIATION FOR COMPUTING MACHINERY, NEW YORK, N.Y, 10 May 2005 (2005-05-10), pages 471 - 479, XP058153389, ISBN: 978-1-59593-046-0, DOI: 10.1145/1060745.1060815
- ALEX HALDERMAN J ET AL: "A convenient method for securely managing passwords", 14TH INTERNATIONAL CONFERENCE ON WORLD WIDE WEB, WWW 2005 : CHIBA, JAPAN, MAY 10 - 14, 2005, ASSOCIATION FOR COMPUTING MACHINERY, NEW YORK, N.Y, 10 May 2005 (2005-05-10), pages 471 - 479, XP058153389, ISBN: 978-1-59593-046-0, DOI: 10.1145/1060745.1060815

## Description

La présente invention est définie par les revendications indépendantes attachées. Des exemples d'implémentation sont donnés dans les revendications dépendantes. L'invention concerne un procédé d'authentification.

Elle trouve une application particulièrement intéressante dans l'accès à des services sensibles dont l'utilisation est conditionnée par une authentification réussie d'un utilisateur. Le procédé permet notamment de protéger ces services contre des attaques par force brute.

Un des mécanismes d'authentification connu et très largement répandu consiste à utiliser un mot de passe w, qui constitue une valeur secrète connue uniquement de l'utilisateur et parfois de l'entité appelée vérifieur auprès de laquelle l'utilisateur doit s'authentifier. Ce mécanisme a l'avantage de pouvoir être déployé facilement.

La sécurité du mot de passe repose alors sur trois éléments : le choix du mot de passe, qui doit être suffisamment complexe pour qu'un attaquant ne le trouve pas facilement, la transmission du mot de passe lors de l'authentification, qui doit être faite à travers un canal sécurisé, et le stockage du mot de passe, nécessaire puisqu'un vérifieur doit pouvoir comparer le mot de passe reçu de l'utilisateur avec une valeur de référence. Cette valeur de référence, si elle est divulguée suite à une compromission de la base de données dans laquelle elle est stockée, ne doit pas permettre à un attaquant de retrouver le mot de passe correspondant.

En général les mots de passe sont stockés sous forme chiffrée dans une base de données gérée par le vérifieur. Le vérifieur doit pouvoir constater que le mot de passe transmis par l'utilisateur au cours de l'authentification est correct. Il n'est cependant pas souhaitable de posséder en permanence l'ensemble des mots de passe, même sous forme chiffrée. C'est pourquoi il est habituel d'utiliser une fonction non inversible, telle qu'une fonction cryptographique de hachage H, produisant une empreinte *H*(*w*) du mot de passe w, et de stocker cette empreinte H(w). L'intérêt d'utiliser une fonction non inversible telle qu'une fonction de hachage est qu'à partir de l'empreinte H(w), il est difficile de retrouver le mot de passe w. Cependant des attaques par recherche exhaustive, consistant à tester toutes les valeurs possibles w' d'un mot de passe et à comparer les empreintes générées *H(w')* avec l'empreinte stockée restent possibles.

Une telle recherche exhaustive ne peut être empêchée mais des méthodes existent afin de la rendre plus difficile.

Ainsi, dans un premier exemple, l'empreinte du mot de passe de référence qui est stockée n'est pas H(w) mais est de la forme *H(w* | s), où s est une valeur générée pseudo-aléatoirement par le vérifieur et appelée habituellement « sel ». La base de données stocke alors des couples *(H(wls),* s). L'usage d'un sel permet de contrecarrer les efforts d'un attaquant qui rechercherait des mots de passe en mettant en oeuvre des pré-calculs. Dans le cas de pré-calculs, un attaquant applique une fonction non inversible à un ensemble de mots de passe possibles et mémorise l'ensemble obtenu. Il recherche ensuite une empreinte de mot de passe dans l'ensemble mémorisé et identifie le mot de passe associé. Avec un sel, distinct d'un mot de passe à un autre, l'attaquant doit mémoriser autant d'ensembles de mots de passe que de valeurs de sel possibles pour mettre en oeuvre cette technique. Cela induit des contraintes de temps de calcul et de mémoire dont l'attaquant doit tenir compte lorsqu'il mène une attaque.

Une variante destinée à ralentir la découverte du mot de passe w à partir d'une empreinte de référence consiste à alourdir artificiellement les calculs en invoquant plusieurs fois la fonction de hachage. L'empreinte est alors de la forme : *F(w) = H^{k}*(*w* | s). Le nombre d'itérations k est choisi de telle manière que le coût supplémentaire en termes de calcul est négligeable lors de l'authentification d'un utilisateur mais rédhibitoire dans le cas d'une recherche exhaustive par un attaquant ; le coût étant alors multiplié par *k.*

Ces deux techniques permettent de ralentir un attaquant lors d'une recherche exhaustive de mot de passe mais n'empêchent pas pour autant une telle attaque. Un attaquant reste enclin à mettre en oeuvre de telles attaques, même au prix d'un effort important. En effet, la durée de vie d'un mot de passe étant généralement assez longue, un attaquant qui le récupère peut l'exploiter durablement. En outre, un utilisateur est en général réticent à changer fréquemment son mot de passe.

Un des buts de l'invention est de remédier à des insuffisances/inconvénients de l'état de la technique et/ou d'y apporter des améliorations.

A cette fin, l'invention propose un procédé d'authentification d'un utilisateur auprès d'un vérifieur, ledit procédé comprenant :
- réception d'un mot de passe saisi par l'utilisateur et d'une première information de contexte saisie par l'utilisateur,
- calcul d'une empreinte courante, en appliquant une fonction à sens unique au mot de passe et à la première information de contexte,
- vérification que l'empreinte courante calculée est égale à une empreinte de référence d'un secret, calculée lors d'une authentification précédente de l'utilisateur, l'authentification étant réussie lorsque l'empreinte courante est égale à l'empreinte de référence.

Le procédé décrit ici permet d'introduire une variabilité importante dans le secret utilisé pour qu'un utilisateur accède à un service sensible, sans pour autant contraindre l'utilisateur à des efforts importants de mémorisation. Le secret utilisé pour authentifier l'utilisateur est ainsi construit à partir d'un mot de passe choisi par l'utilisateur et d'une première information de contexte requise auprès de l'utilisateur à chaque authentification. Le mot de passe est complexe, dans le sens où son choix est en général contraint par l'utilisation de différents types de caractères et par une taille minimale ; il possède en général une durée de vie importante. La première information de contexte est très peu complexe, c'est en général la réponse à une question simple qui nécessite peu d'efforts de mémorisation. Par ailleurs, sa durée de vie est courte puisqu'elle peut être renouvelée à chaque authentification de l'utilisateur. Ainsi, lors d'une authentification, l'utilisateur fournit son mot de passe et la première information de contexte, saisie lors de sa précédente authentification. C'est cette première information de contexte qui introduit la variabilité dans le secret.

Le procédé permet de complexifier des attaques par recherche exhaustive en termes de puissance de calcul, du fait de la variabilité du secret qui peut obliger un attaquant à mettre en oeuvre de nouveau une attaque dès lors que l'utilisateur s'est authentifié de nouveau. Le procédé s'applique de manière privilégiée à des services très sensibles auxquels l'utilisateur accède souvent. En effet, le procédé augmente la sécurisation du mot de passe. De plus, un accès fréquent facilite la mémorisation de la première information de contexte, qui peut être renouvelée à chaque authentification.

Dans un exemple de réalisation, le procédé comprend :
- réception d'une deuxième information de contexte,
- calcul d'une nouvelle empreinte, en appliquant la fonction à sens unique au mot de passe et à la deuxième information de contexte, et remplacement de l'empreinte de référence du secret par la nouvelle empreinte.

Le procédé permet de mettre à jour l'empreinte de référence associée au secret construit à partir du mot de passe et de la première information de contexte.

Dans un exemple de réalisation, le procédé comprend l'envoi à l'utilisateur d'une question associée à la première information de contexte.

L'affichage d'une question associée à la première information de contexte nécessite un minimum d'effort de l'utilisateur qui est ainsi accompagné pour fournir l'information en réponse. Par ailleurs, cela permet au vérifieur de garantir la variabilité de la première information de contexte.

Dans un premier exemple de réalisation, le procédé comprend :
- conversion de la première information de contexte en une valeur numérique,
- utilisation de la valeur numérique comme un sel de la fonction à sens unique de calcul de l'empreinte courante.

Dans cet exemple, la première information de contexte est convertie en valeur numérique puis utilisée comme sel supplémentaire de la fonction à sens unique utilisée pour calculer l'empreinte courante du secret. Cela complexifie d'autant pour un attaquant la recherche exhaustive du mot de passe et de la première information de contexte qui forment le secret.

Dans un deuxième exemple de réalisation, le procédé comprend :
- conversion de la première information de contexte en une valeur numérique,
- calcul de l'empreinte courante du mot de passe résultant en itérant la fonction à sens unique un nombre de fois égale à la valeur numérique.

Dans cet exemple, la première information de contexte est convertie en valeur numérique puis utilisée comme valeur du nombre d'itérations de la fonction à sens unique de calcul de l'empreinte courante. Ainsi, le nombre d'itérations de la fonction à sens unique est variable. Cela complexifie pour l'attaquant la recherche exhaustive du mot de passe et de la première information de contexte qui forment le secret.

L'invention concerne aussi un vérifieur agencé pour authentifier un utilisateur, ledit serveur comprenant :
- des moyens de réception, agencés pour recevoir un mot de passe et une première information de contexte saisis par l'utilisateur,
- des moyens de calcul, agencés pour calculer une empreinte courante, en appliquant une fonction à sens unique au mot de passe et à la première information de contexte,
- des moyens de vérification, agencés pour vérifier que l'empreinte courante calculée est égale à une empreinte de référence d'un secret, calculée lors d'une authentification précédente de l'utilisateur, l'authentification étant réussie lorsque l'empreinte courante est égale à l'empreinte de référence.

Dans un exemple de réalisation, le vérifieur comprend :
- des deuxièmes moyens de réception, agencés pour recevoir une deuxième information de contexte,
- des moyens de calcul et de remplacement, agencés pour calculer une nouvelle empreinte en appliquant la fonction à sens unique au mot de passe de passe et à la deuxième information de contexte, et pour remplacer l'empreinte de référence du secret par la nouvelle empreinte.

L'invention porte également sur un programme d'ordinateur sur un support de données et chargeable dans la mémoire d'un ordinateur, le programme comprenant des portions de code pour l'exécution des étapes du procédé d'authentification tel que décrit précédemment, lorsque le programme est exécuté sur ledit ordinateur.

L'invention concerne aussi un support de données dans lequel est enregistré le programme ci-dessus.

D'autres caractéristiques et avantages de la présente invention seront mieux compris de la description et des dessins annexés parmi lesquels :
- la figure 1 présente les étapes d'un procédé d'authentification, selon un exemple de réalisation ;
- la figure 2 est une représentation schématique d'un vérifieur, apte à mettre en oeuvre le procédé d'authentification, selon un exemple de réalisation.

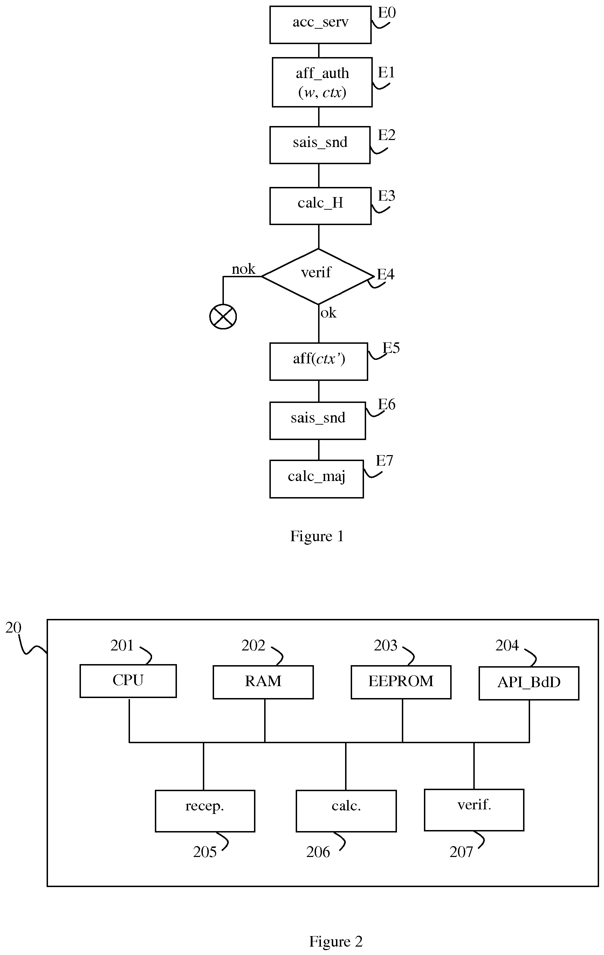

Les étapes d'un procédé d'authentification, selon un exemple de réalisation, vont maintenant être décrites en relation avec la figure 1.

Un utilisateur, équipé d'un terminal (non représenté sur la figure 1), souhaite accéder à distance à un service sensible auquel il a souscrit. L'accès au service est conditionné par une authentification réussie de l'utilisateur auprès d'un serveur d'authentification, ou vérifieur (non représenté sur la figure 1).

Le vérifieur comprend un module logiciel qui comprend des instructions de code aptes à mettre en oeuvre le procédé d'authentification décrit ici.

Dans une étape initiale E0 d'accès au service, l'utilisateur accède à un service, par exemple en saisissant une « URL » (de l'anglais « Uniform Resource Locator ») d'accès au service dans un navigateur de son terminal. Cet accès déclenche, dans une étape E1, l'envoi par le vérifieur et l'affichage sur le terminal de l'utilisateur d'une page d'authentification destinée à demander à l'utilisateur de saisir des informations d'authentification.

La page affichée comprend une zone de saisie d'un mot de passe w, et une zone de saisie d'une première information de contexte *ctx.* Le mot de passe w a été choisi préalablement par l'utilisateur, par exemple, lors d'un premier accès au service après abonnement au service. Le mot de passe w possède une certaine durée de vie, gérée au niveau du vérifieur. La première information de contexte *ctx* est destinée à introduire dans le mot de passe un segment variable. Plus précisément, le mot de passe w et la première information de contexte *ctx* sont associés pour former un secret, utilisé pour accéder au service et dont une partie est variable. La première information de contexte *ctx* peut être qualifiée de secret secondaire par rapport au mot de passe w qui constitue le secret principal de l'utilisateur. Elle a été saisie lors d'une authentification précédente, plus précisément lors de la dernière authentification de l'utilisateur.

Dans un exemple de réalisation, une zone d'affichage est associée à la première information de contexte *ctx.* Cette zone est destinée à afficher une question associée à la première information de contexte, de manière à aider l'utilisateur lors de la saisie de la première information de contexte *ctx.* En effet, la première information de contexte *ctx* peut changer fréquemment. Lui associer une question permet d'aider l'utilisateur à la retrouver plus facilement. Dans un autre exemple de réalisation, aucune zone d'affichage n'est associée à la première information de contexte. Ainsi, l'utilisateur doit saisir cette première information de contexte sans recevoir aucune indication du vérifieur quant à la nature de cette information. Cela permet de réduire l'information qu'un attaquant peut obtenir pour identifier la première information de contexte. Les divulgations suivantes font parties de l'art antérieur:

- ALEX HALDERMAN J ET AL: "A convenient method for securely managing passwords", 14TH INTERNATIONAL CONFERENCE ON WORLD WIDE WEB, WWW 2005 : CHIBA, JAPAN, MAY 10 - 14, 2005, ASSOCIATION FOR COMPUTING MACHINERY, NEW YORK, N.Y, 10 mai 2005 (2005-05-10), pages 471-479, XP058153389, DOI: 10.1145/1060745.1060815 ISBN: 978-1-59593-046-0 divulgue le hachage d'un mot de passe en deux étapes pour diversifier un mot de passe maître : d'abord le nom d'utilisateur et le mot de passe maître sont hachés, puis le résultat est haché avec le nom de domaine pour en déduire un mot de passe diversifié pour ce domaine dans une extension firefox. Un compteur incluant le mois et l'année ou un index indiquant le nombre de changements de mots de passe peut être concaténé avec le nom de domaine pour assurer un changement régulier que l'utilisateur doit mettre à jour lorsqu'il change de terminal.

WO 2006/014358 A1 (RSA SECURITY INC [US]; KALISKI BURTON S [US]; NYSTROM MAGNUS [SE]) 9 février 2006 (2006-02-09) divulgue la combinaison par hachage d'un mot de passe à durée limitée (qui peut être statique) avec des informations données par un serveur (e.g. adresse et nom) et éventuellementη un compteur et des informations sur le terminal ou la transaction de l'utilisateur. Un sel et poivre peuvent donc être utilisés, le serveur stockant le poivre et le renvoyant à chaque authentification. Une itération du hachage est envisagée pour complexifier la procédure.

US 2003/131266 A1 (BEST STEVEN FRANCIS [US] ET AL) 10 juillet 2003 (2003-07-10) divulgue un outil pour diversifier des mots de passes en utilisant le nom de domaine et des clefs globales (prédéfinies) générées par l'utilisateur avec un mot de passe maître . Le nombre de clefs globales est limité et l'index d'utilisation incrémenté automatiquement à chaque diversification. Un nombre d'itérations de fonctions de hachage peut être configuré.

Dans un premier exemple de réalisation, la première information de contexte *ctx* a une variabilité importante dans le sens où elle est susceptible de varier à chaque authentification. Par exemple, la question qui figure dans la zone d'affichage associée à la première information de contexte porte sur la météo du jour, ou une heure, ou une date, un lieu où se trouve l'utilisateur, etc. Dans un deuxième exemple de réalisation, la première information de contexte *ctx* a une variabilité plus faible, dans le sens où elle ne varie pas pendant une période de temps donné et reste identique lors d'authentifications successives mises en oeuvre durant cette période de temps. Par exemple, la question qui figure dans la zone d'affichage demande à l'utilisateur son âge, son poids, son adresse, etc. On comprend que dans ce cas, l'effort demandé à l'utilisateur pour mémoriser la première information de contexte est moindre.

Une forte variabilité de la première information de contexte *ctx* permet de faire varier le secret très souvent sans pour autant faire varier le mot de passe w.

Dans une étape suivante E2 de saisie et d'envoi, l'utilisateur renseigne son mot de passe w ainsi que la première information de contexte *ctx.* Une fois saisis, le mot de passe w et la première information de contexte *ctx* sont envoyés au vérifieur.

Dans une étape E3 de calcul d'une empreinte courante, le vérifieur calcule une conversion G est une fonction non inversible, par exemple une fonction de hachage. L'avantage d'une telle fonction est qu'elle ralentit pour l'attaquant la recherche exhaustive du mot de passe car l'attaquant doit également identifier la première information de contexte *ctx* à partir de la valeur numérique *n,* puisque *n* = *G*(*ctx*)*.* Dans cet exemple, la valeur numérique *n* joue le rôle d'un sel supplémentaire par rapport à s et complexifie encore plus la recherche d'un mot de passe. L'utilisation de la constante k est destinée à ralentir la découverte d'un mot de passe par une attaque par recherche exhaustive en alourdissant artificiellement les calculs en invoquant plusieurs fois la fonction non inversible. En effet, le coût d'une telle attaque est multiplié par *k* pour l'attaquant.

Dans un deuxième exemple de calcul, l'empreinte courante du secret est égale à *Hⁿ*(*w* | s), où *n* est la valeur numérique obtenue par conversion de la première information de contexte *ctx* en une valeur numérique au moyen de la fonction de conversion G. Dans cet exemple, la fonction de hachage H est invoquée *n*-fois. Cet exemple est avantageux dans le sens où la valeur de n peut varier d'une authentification à une autre. Il est donc impossible de connaître à l'avance le nombre d'itérations de la fonction non inversible H. Ainsi, dans le cas où l'attaquant applique la fonction à sens unique H à un ensemble de mots de passe possibles w' pour un sel s' identifié, et recherche ensuite dans l'ensemble de valeurs obtenu l'empreinte courante d'un secret afin d'identifier le mot de passe w, ne pas connaître n induit une puissance de calcul et un espace mémoire supplémentaires, sans garantie au final d'identifier le mot de passe. En effet, l'attaquant doit itérer l'application de la fonction à sens unique H un nombre indéterminé de fois, puisqu'il ne connaît pas n. Il doit ensuite comparer l'empreinte courante aux valeurs obtenues. Par ailleurs, on note que si n est inférieur au nombre d'itérations, choisi par l'attaquant, de la fonction H, l'attaquant a une chance d'identifier le mot de passe. Si par contre, le nombre d'itérations est supérieur à n, l'attaquant a peu de chances de trouver le mot de passe.

Dans une étape E4 de vérification, le serveur 11 vérifie la présence de l'empreinte courante du secret dans une base de données d'empreintes de référence. La base de données d'empreintes de référence comprend pour l'ensemble des utilisateurs qui ont souscrit au service, une empreinte de référence de leur secret. L'empreinte de référence est supposée valide, c'est-à-dire calculée à partir du mot de passe w de l'utilisateur et d'une information de contexte fournie lors de la dernière authentification réussie de l'utilisateur.

Dans un premier cas (branche « nok » sur la figure 1) où l'empreinte courante ne figure pas dans la base de données d'empreintes de référence, le procédé s'arrête. En effet, l'authentification de l'utilisateur a échoué. Des procédures pour redemander le mot de passe et la première information de contexte, voire pour bloquer l'accès au service lorsque des informations erronées ont été saisies un nombre maximal de fois, peuvent être mises en oeuvre. Ces procédures sont classiques et ne sont pas décrites ici.

Dans un deuxième cas (branche « ok » sur la figure 1), l'empreinte courante figure dans la base de données d'empreintes de référence. Cela signifie que l'authentification de l'utilisateur a réussi. En effet, le mot de passe w et la première information de contexte *ctx* sont supposés corrects puisque l'empreinte courante calculée à partir de ces deux valeurs a été trouvée dans la base de données d'empreintes de référence. L'utilisateur peut alors accéder au service.

Dans une étape suivante E5 de demande d'une deuxième information de contexte, le serveur d'authentification 11 demande à l'utilisateur de saisir une deuxième information de contexte *ctx'.* Une deuxième zone de saisie est affichée à cet effet. La deuxième information de contexte *ctx'* est destinée à être utilisée pour construire une nouvelle empreinte de référence du secret en appliquant la fonction à sens unique H au mot de passe w et la deuxième information de contexte *ctx',* et à remplacer l'empreinte de référence dans la base de données d'empreintes de référence pour une authentification suivante. Il est important que le choix de la question, qui conditionne donc la nature de la deuxième information de contexte soit choisie par le vérifieur. Cela permet de garantir la variabilité de cette deuxième information de contexte et donc du secret construit et stocké en tant que nouvelle empreinte de référence.

Dans une étape E6 de saisie et d'envoi, l'utilisateur saisit l'information demandée. La deuxième information de contexte *ctx'* saisie est envoyée au vérifieur.

Dans une étape E7 de calcul et de mise à jour, le vérifieur calcule la nouvelle empreinte de référence et l'enregistre dans la base de données d'empreintes de référence, en association avec l'utilisateur. Cette nouvelle empreinte de référence remplace l'empreinte de référence associée à l'utilisateur dans la base de données d'empreintes de référence.

En d'autres termes, lors d'une authentification courante, une première et une deuxième information de contexte sont demandées à l'utilisateur. La première information de contexte est celle qui a été saisie lors de la dernière authentification de l'utilisateur ; elle est utilisée pour l'authentification courante de l'utilisateur. La deuxième information de contexte, demandée lors de l'authentification courante est destinée à être demandée lors de la prochaine authentification de l'utilisateur.

Dans l'exemple de réalisation décrit ici, la deuxième information de contexte *ctx'* n'est demandée qu'après vérification du mot de passe w et de la première information de contexte *ctx.* Dans un autre exemple, le mot de passe w et les première et deuxième informations de contexte, *ctx, ctx'* sont demandées en même temps. La vérification du secret est ensuite mise en oeuvre.

Ainsi, l'utilisateur doit toujours mémoriser un secret principal : le mot de passe w. Le mot de passe est persistant et souvent complexe : il comprend en général un nombre minimal de caractères, est formé de différents types de caractères tels que des chiffres, des lettres et des caractères de ponctuation. L'utilisateur doit également mémoriser une information de contexte très peu complexe qui nécessite peu d'effort de mémoire. Cet élément de contexte introduit une variabilité importante dans le secret et impacte l'empreinte de référence stockée dans la base de données d'empreintes de référence.

Un attaquant qui souhaite usurper l'identité d'un utilisateur pour accéder à un service en utilisant ses données d'authentification doit donc récupérer l'empreinte de référence associée à l'utilisateur à chaque fois que celle-ci est renouvelée, c'est-à-dire potentiellement à chaque authentification. Il doit ensuite mettre en oeuvre une certaine puissance de calcul pour obtenir le mot de passe et l'information de contexte utilisés pour calculer le secret permettant une authentification réussie de l'utilisateur. Cependant, ces informations ne sont plus valides dès que l'utilisateur s'authentifie de nouveau.

Considérons par exemple une empreinte de référence de la forme *H^{k}*(*w* | s | *n*). Une attaque sur une telle empreinte, si elle aboutit permet à l'attaquant d'obtenir le mot de passe w, et la valeur numérique *n* qui correspond à une information de contexte. Si *t*₁ représente le nombre de valeurs possibles pour w, *t*₂ le nombre de valeurs possibles pour *n*, alors l'attaquant doit invoquer la fonction de hachage *H,* (*t*₁ × *t*₂ × k)-fois, ce qui accroît le coût d'une attaque d'un facteur *t*₂ par rapport aux techniques classiques. En outre, la seule connaissance de *n* ne permet pas à l'attaquant de répondre à une authentification puisque *n* a été obtenu en appliquant une fonction de conversion G à une information de contexte. L'attaquant doit donc également inverser la fonction de conversion G, ce qui représente un coût supplémentaire. Si l'attaquant arrive à obtenir le mot de passe w et l'information de contexte *ctx,* il peut s'authentifier à la place de l'utilisateur à condition que celui-ci ne procède pas à une nouvelle authentification qui entraînerait un renouvellement de l'information de contexte *ctx,* et donc de *n.* Dans ce cas, l'attaquant doit récupérer une nouvelle empreinte de référence *H^{k}*(*w* | *s* | *n*'), puis effectuer de nouveaux calculs pour trouver *n'* puis l'information de contexte associée.

Lorsque la valeur numérique *n* est utilisée comme sel supplémentaire, c'est-à-dire dans le cas où l'empreinte de référence est de la forme : *H^{k}*(*w* | *s* | *n*), la quantité de valeurs possibles pour *n* doit être supérieure à une valeur minimale afin de ralentir la recherche exhaustive.

Lorsque la valeur numérique *n* est utilisée comme nombre d'itérations de la fonction à sens unique *H,* c'est-à-dire dans le cas où l'empreinte de référence est de la forme : *Hⁿ*(*w* | s), *n* doit être supérieur à une valeur minimale, de manière à ralentir une recherche exhaustive et inférieur à une valeur maximale afin que la calcul d'une empreinte courante lors d'une authentification reste négligeable.

Le procédé trouve une application intéressante pour l'accès à des services sensibles, par exemple des services de banque en ligne, de compte e-mail, d'achat en ligne, etc. Dans ce cas cependant, l'utilisateur doit mémoriser autant d'informations de contexte que de services sensibles qui mettent en oeuvre le procédé. Afin de faciliter la gestion de ces informations de contexte, l'utilisateur peut utiliser un moyen classique de stockage des mots de passe tel qu'un gestionnaire de mots de passe.

Un vérifieur agencé pour mettre en oeuvre une authentification telle que décrite précédemment va maintenant être décrit en relation avec la figure 2.

Un vérifieur 20 est un équipement informatique, tel qu'un serveur. Il comprend de manière classique :
- une unité de traitement ou processeur 201, ou "CPU" (de l'anglais "Central Processing Unit"), destinée à charger des instructions en mémoire, à les exécuter, à effectuer des opérations ;
- un ensemble de mémoires, dont une mémoire volatile 202, ou "RAM" (pour "Random Access Memory") utilisée pour exécuter des instructions de code, stocker des variables, etc., et une mémoire de stockage 203 de type « EEPROM » (de l'anglais « Electrically Erasable Programmable Read Only Memory »). En particulier, la mémoire de stockage 203 est agencée pour mémoriser un module logiciel d'authentification qui comprend des instructions de code pour mettre en oeuvre les étapes du procédé d'authentification tel que décrit précédemment ;
- une interface d'accès à une base de données d'empreintes 204 agencée pour accéder à une base de données d'empreintes de référence. La base de données d'empreintes de référence comprend pour un ensemble d'utilisateurs abonnés au service, une empreinte de référence du secret associée à un identifiant de l'utilisateur. L'empreinte de référence du secret est calculée par le serveur d'authentification en fonction du mot de passe w et d'une information de contexte saisie par l'utilisateur au cours de la dernière authentification réussie mise en oeuvre lors d'un accès précédent de celui-ci au service.

Le vérifieur comprend également :
- un module de réception 205, agencé pour recevoir un mot de passe et une première information de contexte saisis par l'utilisateur. Le module de réception 205 est agencé pour mettre en oeuvre l'étape E2 du procédé d'authentification tel que décrit précédemment ;
- un module de calcul 206, agencé pour calculer une empreinte courante, en appliquant une fonction à sens unique au mot de passe et à la première information de contexte. Le module de calcul 206 est agencé pour mettre en oeuvre l'étape E3 du procédé d'authentification décrit précédemment ;
- un module de vérification 207, agencé pour vérifier que l'empreinte courante calculée est égale à une empreinte de référence d'un secret, calculée lors d'une authentification précédente de l'utilisateur, l'authentification étant réussie lorsque l'empreinte courante est égale à l'empreinte de référence. Le module de vérification 207 est agencé pour mettre en oeuvre l'étape E4 du procédé d'authentification décrit précédemment.

Les modules de réception 205, de calcul 206, de vérification 207 et l'interface d'accès à la base de données d'empreintes 204 sont de préférence des modules logiciels comprenant des instructions logicielles pour mettre en oeuvre les étapes du procédé d'authentification précédemment décrit.

L'invention concerne donc aussi :
- un programme d'ordinateur comportant des instructions pour la mise en oeuvre du procédé d'authentification tel que décrit précédemment lorsque ce programme est exécuté par un processeur du vérifieur 20,
- un support d'enregistrement lisible sur lequel est enregistré le programme d'ordinateur décrit ci-dessus.

Dans un exemple de réalisation, le vérifieur comprend également les modules suivants (non représentés sur la figure 2) :
- des deuxièmes moyens de réception, agencés pour recevoir une deuxième information de contexte *ctx'.* La deuxième information de contexte est destinée à être utilisée pour mettre à jour l'empreinte du secret dans la base de données des empreintes de référence ;
- des moyens de calcul et de remplacement, agencés pour calculer une nouvelle empreinte du secret, en appliquant la fonction à sens unique H au mot de passe w et à la deuxième information de contexte *ctx'.* Les moyens de calcul et de remplacement son également agencés pour remplacer l'empreinte de référence du secret dans la base de données des empreintes de référence par la nouvelle empreinte.

## Revendications

1. Procédé d'authentification d'un utilisateur auprès d'un vérifieur, ledit procédé comprenant :
- réception (E2) d'un mot de passe (w) saisi par l'utilisateur et d'une première information de contexte *(ctx)* saisie par l'utilisateur, ,
- calcul (E3) d'une empreinte courante, en appliquant une fonction à sens unique au mot de passe et à la première information de contexte,
- vérification (E4) que l'empreinte courante calculée est égale à une empreinte de référence d'un secret, calculée lors d'une authentification précédente de l'utilisateur, l'authentification étant réussie lorsque l'empreinte courante est égale à l'empreinte de référence,
- réception (E6) d'une deuxième information de contexte saisie par l'utilisateur authentifié en réponse à une demande du vérifieur,
- calcul (E7) d'une nouvelle empreinte de référence, en appliquant la fonction à sens unique au mot de passe et à la deuxième information de contexte, et remplacement de l'empreinte de référence du secret par la nouvelle empreinte de référence pour une authentification suivante.

2. Procédé selon la revendication 1, comprenant l'envoi à l'utilisateur d'une question associée à la première information de contexte.

3. Procédé selon la revendication 1 comprenant :
- conversion de la première information de contexte en une valeur numérique,
- utilisation de la valeur numérique comme un sel de la fonction à sens unique de calcul de l'empreinte courante.

4. Procédé selon la revendication 1 comprenant :
- conversion de la première information de contexte en une valeur numérique,
- la fonction à sens unique comprenant un nombre d'itérations égal à la valeur numérique.

5. Vérifieur (11) agencé pour authentifier un utilisateur, ledit serveur comprenant :
- des moyens de réception (205), agencés pour recevoir un mot de passe (w) et une première information de contexte (ctx) saisis par l'utilisateur,
- des moyens de calcul (206), agencés pour calculer une empreinte courante, en appliquant une fonction à sens unique au mot de passe et à la première information de contexte,
- des moyens de vérification (207), agencés pour vérifier que l'empreinte courante calculée est égale à une empreinte de référence d'un secret, calculée lors d'une authentification précédente de l'utilisateur, l'authentification étant réussie lorsque l'empreinte courante est égale à l'empreinte de référence
- des deuxièmes moyens de réception, agencés pour recevoir une deuxième information de contexte saisie par l'utilisateur authentifié en réponse à une demande du vérifieur,
- des moyens de calcul et de remplacement, agencés pour calculer une nouvelle empreinte de référence en appliquant la fonction à sens unique au mot de passe de passe et à la deuxième information de contexte, et pour remplacer l'empreinte de référence du secret par la nouvelle empreinte de référence pour une authentification suivante.

6. Programme d'ordinateur sur un support de données et chargeable dans la mémoire d'un ordinateur, le programme comprenant des portions de code pour l'exécution des étapes du procédé d'authentification selon l'une quelconque des revendications 1 à 4, lorsque le programme est exécuté sur ledit ordinateur.

7. Support de données dans lequel est enregistré le programme selon la revendication 6.

8. Terminal utilisateur agencé pour authentifier l'utilisateur auprès d'un vérifieur (11), comprenant :
- des premiers moyens de saisie et d'envoi, agencés pour saisir un mot de passe (w) et une première information de contexte (ctx), et destinée à être utilisée par le vérifieur pour calculer une empreinte courante en appliquant une fonction à sens unique au mot de passe et à la première information de contexte, ladite empreinte courante étant destinée à être utilisée par le vérifieur pour authentifier l'utilisateur,
- des deuxièmes moyens de saisie et d'envoi, agencés pour saisir une deuxième information de contexte, saisie par l'utilisateur authentifié en réponse à une demande du vérifieur, lorsque l'authentification de l'utilisateur par le vérifieur a réussi, ladite deuxième information de contexte étant destinée à être utilisée pour construire une nouvelle empreinte de référence en appliquant la fonction à sens unique au mot de passe et à la deuxième information de contexte, ladite nouvelle empreinte de référence étant destinée à remplacer l'empreinte courante de référence pour une authentification suivante.

## Patentansprüche

1. Verfahren zur Authentifizierung eines Benutzers bei einem Verifizierer, wobei das Verfahren umfasst:
- Empfangen (E2) eines Passworts *(w),* das von dem Benutzer eingegeben wird, und einer ersten Kontextinformation (ctx), die von dem Benutzer eingegeben wird,
- Berechnen (E3) eines aktuellen Abdrucks, indem eine Einwegfunktion auf das Passwort und auf die erste Kontextinformation angewendet wird,
- Verifizieren (E4), dass der berechnete aktuelle Abdruck gleich einem Referenzabdruck eines Geheimnisses ist, der bei einer vorhergehenden Authentifizierung des Benutzers berechnet wurde, wobei die Authentifizierung erfolgreich ist, wenn der aktuelle Abdruck gleich dem Referenzabdruck ist,
- Empfangen (E6) einer zweiten Kontextinformation, die von dem authentifizierten Benutzer als Antwort auf eine Frage des Verifizierers eingegeben wird,
- Berechnen (E7) eines neuen Referenzabdrucks, indem die Einwegfunktion auf das Passwort und auf die zweite Kontextinformation angewendet wird, und Ersetzen des Referenzabdrucks des Geheimnisses durch den neuen Referenzabdruck für eine folgende Authentifizierung.

2. Verfahren nach Anspruch 1, umfassend das Senden einer Frage, die mit der ersten Kontextinformation verknüpft ist, an den Benutzer.

3. Verfahren nach Anspruch 1, umfassend:
- Umwandeln der ersten Kontextinformation in einen numerischen Wert,
- Verwenden des numerischen Werts als Salt der Einwegfunktion zum Berechnen des aktuellen Abdrucks.

4. Verfahren nach Anspruch 1, umfassend:
- Umwandeln der ersten Kontextinformation in einen numerischen Wert,
- wobei die Einwegfunktion eine Anzahl von Iterationen gleich dem numerischen Wert umfasst.

5. Verifizierer (11), der dazu eingerichtet ist, einen Benutzer zu authentifizieren, wobei der Server umfasst:
- Empfangsmittel (205), die dazu eingerichtet sind, ein Passwort (w) und eine erste Kontextinformation (ctx) zu empfangen, die von dem Benutzer eingegeben werden,
- Rechenmittel (206), die dazu eingerichtet sind, einen aktuellen Abdruck zu berechnen, indem eine Einwegfunktion auf das Passwort und auf die erste Kontextinformation angewendet wird,
- Verifizierungsmittel (207), die dazu eingerichtet sind zu verifizieren, dass der berechnete aktuelle Abdruck gleich einem Referenzabdruck eines Geheimnisses ist, der bei einer vorhergehenden Authentifizierung des Benutzers berechnet wurde, wobei die Authentifizierung erfolgreich ist, wenn der aktuelle Abdruck gleich dem Referenzabdruck ist,
- zweite Empfangsmittel, die dazu eingerichtet sind, eine zweite Kontextinformation zu empfangen, die von dem authentifizierten Benutzer als Antwort auf eine Frage des Verifizierers eingegeben wird,
- Rechen- und Ersetzungsmittel, die dazu eingerichtet sind, einen neuen Referenzabdruck zu berechnen, indem die Einwegfunktion auf das Passwort und auf die zweite Kontextinformation angewendet wird, und den Referenzabdruck des Geheimnisses durch den neuen Referenzabdruck für eine folgende Authentifizierung zu ersetzen.

6. Computerprogramm auf einem Datenträger und in den Speicher eines Computers ladbar, wobei das Programm Codeabschnitte umfasst, um bei der Ausführung des Programms auf dem Computer die Schritte des Authentifizierungsverfahrens nach einem der Ansprüche 1 bis 4 auszuführen.

7. Datenträger, in dem das Programm nach Anspruch 6 gespeichert ist.

8. Benutzerendgerät, das dazu eingerichtet ist, den Benutzer bei einem Verifizierer (11) zu authentifizieren, umfassend:
- erste Eingabe- und Sendemittel, die dazu eingerichtet sind, ein Passwort (w) und eine erste Kontextinformation (ctx) einzugeben, und dazu bestimmt sind, von dem Verifizierer verwendet zu werden, um einen aktuellen Abdruck zu berechnen, indem eine Einwegfunktion auf das Passwort und auf die erste Kontextinformation angewendet wird, wobei der aktuelle Abdruck dazu bestimmt ist, von dem Verifizierer verwendet zu werden, um den Benutzer zu authentifizieren,
- zweite Eingabe- und Sendemittel, die dazu eingerichtet sind, eine zweite Kontextinformation einzugeben, die von dem authentifizierten Benutzer als Antwort auf eine Frage des Verifizierers eingegeben wurde, wenn die Authentifizierung des Benutzers durch den Überprüfer erfolgreich war, wobei die zweite Kontextinformation dazu bestimmt ist, zum Erstellen eines neuen Referenzabdrucks verwendet zu werden, indem die Einwegfunktion auf das Passwort und auf die zweite Kontextinformation angewendet wird, wobei der neue Referenzabdruck dazu bestimmt ist, den aktuellen Referenzabdruck für eine folgende Authentifizierung zu ersetzen.

## Claims

1. Method for authentication of a user by a verifier, said method comprising:
- receiving (E2) a password (w) input by the user and a first piece of context information (ctx) input by the user,
- computing (E3) a current fingerprint, by applying a one-way function to the password and to the first piece of context information,
- verifying (E4) that the computed current fingerprint is equal to a reference fingerprint of a secret, which fingerprint was calculated during a preceding authentication of the user, the authentication being successful when the current fingerprint is equal to the reference fingerprint,
- receiving (E6) a second piece of context information, input by the authenticated user in response to a request by the verifier,
- computing (E7) a new reference fingerprint, by applying the one-way function to the password and to the second piece of context information, and replacing the reference fingerprint of the secret with the new reference fingerprint for a subsequent authentication.

2. Method according to Claim 1, comprising transmitting, to the user, a question associated with the first piece of context information.

3. Method according to Claim 1, comprising:
- converting the first piece of context information into a numerical value,
- using the numerical value as a salt of the one-way function for computing the current fingerprint.

4. Method according to Claim 1, comprising:
- converting the first piece of context information into a numerical value,
- the one-way function having a number of iterations equal to the numerical value.

5. Verifier (11) arranged to authenticate a user, said server comprising:
- receiving means (205), arranged to receive a password (w) and a first piece of context information (ctx) that are input by the user,
- computing means (206), arranged to compute a current fingerprint, by applying a one-way function to the password and to the first piece of context information,
- verifying means (207), arranged to verify that the computed current fingerprint is equal to a reference fingerprint of a secret, which fingerprint was calculated during a preceding authentication of the user, the authentication being successful when the current fingerprint is equal to the reference fingerprint,
- second receiving means, arranged to receive a second piece of context information, input by the authenticated user in response to a request by the verifier,
- computing and replacing means, arranged to compute a new reference fingerprint, by applying the one-way function to the password and to the second piece of context information, and to replace the reference fingerprint of the secret with the new reference fingerprint for a subsequent authentication.

6. Computer program on a data storage medium and able to be loaded into the memory of a computer, the program comprising code sections for executing the steps of the authentication method according to any one of Claims 1 to 4 when the program is executed on said computer.

7. Data medium on which the program according to Claim 6 is recorded.

8. User terminal arranged to authenticate the user by means of a verifier (11), comprising:
- first inputting and transmitting means, arranged to input a password (w) and a first piece of context information (ctx), and intended to be used by the verifier to compute a current fingerprint, by applying a one-way function to the password and to the first piece of context information, said current fingerprint being intended to be used by the verifier to authenticate the user,
- second inputting and transmitting means, arranged to input a second piece of context information, input by the authenticated user in response to a request by the verifier, when the authentication of the user by the verifier has been successful, said second piece of context information being intended to be used to construct a new reference fingerprint, by applying the one-way function to the password and to the second piece of context information, said new reference fingerprint being intended to replace the current reference fingerprint for a subsequent authentication.
